# EUROPEAN PATENT SPECIFICATION

(11) **EP 3 995 539 B1**
(45) Date of publication and mention of the grant of the patent: **07.01.2026**
(21) Application number: 20206323.6
(22) Date of filing: 06.11.2020
(51) Int. Cl.: C08K 5/103, C08L 91/00, C08L 23/16, C08L 53/02

(54) **GREEN PROCESSING OILS FOR ELASTOMER COMPOUNDING**
GRÜNVERARBEITENDE ÖLE FÜR ELASTOMER-COMPOUNDIERUNG
HUILES DE TRAITEMENT VERTES POUR LE MÉLANGE D'ÉLASTOMÈRES

(43) Date of publication of application: 11.05.2022
(73) Proprietor: Oleotecnica S.p.A., 20122 Milano MI (IT)
(72) Inventor: VIRTUANI, Alessandro, 20131 Milano MI (IT)
(74) Representative: Gislon, Gabriele

(56) References cited:
- US-A- 4 567 928
- US-A- 5 520 708
- US-A1- 2015 158 993
- PETROVIC ZORAN S. ET AL: "EPDM RUBBER PLASTICIZED WITH POLYMERIC SOYBEAN OIL OF DIFFERENT MOLECULAR WEIGHTS", RUBBER CHEMISTRY AND TECHNOLOGY, vol. 90, no. 4, 1 October 2017 (2017-10-01), US, pages 667 - 682, XP093105636, ISSN: 0035-9475, Retrieved from the Internet <URL:http://meridian.allenpress.com/rct/article-pdf/90/4/667/1947720/rct_18_82690.pdf> [retrieved on 20231127], DOI: 10.5254/rct.18.82690

## Description

### FIELD OF INVENTION

The present invention refers to the field of elastomer compounding, as production of polymers, production and processing of natural and synthetic rubbers, production of plastics and resins, including adhesives and in particular to new mixtures to be used as processing oils, comprising refined mineral oil components and ester components, and which are a more environmentally friendly additive with respect to the state of the art.

### STATE OF THE ART

It is common practice in the processing of production of polymers, production and processing of natural and synthetic rubbers, production of plastics and resins, including adhesives, to use mineral oils during the compounding stage. These oils, also called "processing" oils, have different functions in the production and extension process; they mainly act as plasticizers and they are used during rubber mixing to improve the production and enhance the final product performance. Their presence increases the chain mobility causing an increasing in deformability and flexibility of the rubber, thus avoiding undesired effects on mechanical properties of the final product. Furthermore, when used in significant amount, such oils "extend" the volume of the final product, reducing costs.

Known and commonly used processing oils are mineral oils, obtained from refined petroleum derivatives; according to their chemical composition they can be categorized as naphthenic, paraffinic, and aromatic.

In the case of other elastomeric products, such as, for examples, gaskets, sliding belts, flexible pipes and tubes, and also more sophisticated applications, like the one employed in the pharmaceutical/health care field, different rubbers may be used such as *i.e.* EPDM, EPR, SEBS, SBS, SBC, PVC, NBR, BR, IR, SBR. The most commonly used processing oils for these rubbers are paraffinic and naphthenic severely-refined mineral oils. For these oils the classification as a carcinogen is not necessary if it can be shown that the substance contains less than 3% extract of DMSO according to the IP 346 measurement "Determination of the aromatic polycyclics in unused lubricating base oils and petroleum fractions without asphaltene - extraction of dimethyl sulfoxide", Institute of Petroleum, London. This kind of oils are also known as "refined oils" and are less harmful for humans but still detrimental from an environmental point of view.

A great effort is being made in order to find more environmentally friendly alternatives to the known processing oils, facing the challenge of identifying compounds suitable to work as extender oils in rubber compounding and to maintain the final product characteristics of the same rubber when extended with mineral oils.

Some attempts are being made, for example, to replace at least part of mineral oils with oils of natural origin, in particular vegetable oils such as soybean oil, palm oil, castor oil, linseeds oil, derivatives of vegetable carboxylic acids and polyols, and similar oils.

US 2015/158993 describes an elastomeric composition which comprises at least one elastomer, natural or synthetic, and at least one derivative of vegetable oils selected from various types, which also include esters of at least a monocarboxylic and at least a dicarboxylic acid with a polyol.

US 4567928 describes a formulation for producing tires, particularly suitable for driving on snow and/or ice, which uses, as elastomers, a mixture of rubbers chosen from those normally employed for the production of tires. These rubbers can be processed with a process oil consisting of a mixture of a paraffinic oil (softener) and a *"low-temperature ester type plasticizer"* which would help improve the grip of the tire in the presence of ice or snow.

US 5520708 discloses a method to reduce the crystallisation temperature of a liquid fuel blend by combining petroleum distillates with an ester, deriving from soybean oil, in an amount effective to lower the crystallisation onset point by a specific value.

Petrovic Zoran S. et. Al : « EPDM Rubber Plastizied wit Polymeric Soybean Oil of Different Molecular Weights", Rubber Chemistry Technology, vol. 90, no. 4, 1 October 2017, pages 667-682, XP093105636 discloses the use of polymerized soybean oil as plasticizer/additive with rubbers, in particular with EPDM, instead of commonly used mineral oils.

ITMI20102325 describes an elastomer composition comprising, as extender oil, vegetable oil derivatives selected from specific triglycerides or ester of polyols, to be used, in particular, in the fields of tires production with natural or synthetic rubbers, such as the Styrene/Butadiene rubber.

To fully replace known mineral oil with a vegetable oil in the compounding process of natural and synthetic elastomers, seems difficult to bring in to reality. In fact, it is presently not possible, yet, to achieve in the final extended elastomer the same technical performances obtained using the conventional mineral processing oils, both in terms of process conditions and product features. Furthermore, from the economical point of view, the use of the more environmentally friendly oils is less cost effective.

For all the above reasons, mixtures of processing oils are investigated.

There is therefore the need for new options and alternative compositions to be used as substitutes of the currently employed processing mineral oils for elastomer compounding which are more sustainable from an environmental point of view but also cost effective and able to give the same or very similar performances of the conventional ones.

In particular it is still needed to provide effective mixtures of processing oils for elastomer production and extension in the field of elastomers such as ethylene/propylene rubbers, like ethylene/propylene copolymers (EPR), ethylene/propylene/diene terpolymers (EPDM), Styrene/Ethylene/Butadiene/Styrene (SEBS), Styrene /Butadiene/Styrene (SBS), and others Saturated Styrenic Block Copolymer (SBC), Polyvinyl Chloride (PVC), Nitrile Rubber (NBR), Polybutadiene (BR), Polyisoprene (IR), Styrene-Butadiene (SBR), etcetera.

Furthermore, the use of those more environmentally friendly process oils can be directed not only to synthetic and natural rubber compounding but also to production of polymers, production and processing of natural and synthetic rubbers, production of plastics and resins, including adhesives, and their vast possibility of application in different fields, including the technologically demanding food field and the health care industries, also including the use in formulation with transparent, white or light-coloured polymers.

### OBJECTS OF THE INVENTION

It is an aim of the present invention to provide a new mixture of processing oils for production of polymers, production and processing of natural and synthetic rubbers and elastomers, production of plastics and resins, including adhesives, which is more environmentally friendly with respect to the mineral oils commonly used today and which is fully compatible with previously mentioned products during and after processing.

This specific aim, together with other objects, will be presented in detail in the following paragraphs where the present invention is further described.

### DESCRIPTION OF THE INVENTION

The present invention relates to the field of process additives to be used within the elastomer compounding process.

In particular, the present invention relates to a processing oil compounding an elastomer as defined in claim 1, the use of said processing oil as defined in claim 7, a process of production of elastomers as defined in claim 8 and an elastomer as defined in claim 10.

The present application concerns a new mixture, of a mineral oil component (herein also referred to as "mineral oil") and a biodegradable/environmentally friendly component, namely an ester component (herein also referred to as "ester" or "ester substance"), to be used as an ingredient for production and extension of elastomeric polymers in order to improve their workability and the characteristics of the finished products.

The expression "processing oil" makes reference to oils for production and/or extension of polymers, the oils being used as plasticizers or, more generally, as additional components aimed to improve the overall process and/or the features of the final product, possibly reducing the costs and/or the consumed energy.

The term "elastomer" or "rubber" herein indicates a polymer which presents viscoelasticity (*i.e.* both viscosity and elasticity) and weak intermolecular forces, which permit the polymers to stretch in response to macroscopic stresses.

In the present invention, rubber polymers are selected from EPDM (ethylene/propylene/diene terpolymers), EPR (ethylene/propylene copolymers), SBS (Styrene/Butadiene/Styrene), SEBS (Styrene/Ethylene/Butadiene/Styrene), SBC (Saturated Styrenic Block Copolymer), , BR (Polybutadiene), IR (Polyisoprene),.

According to one aspect, the present invention relates to a mixture which comprises at least one refined mineral oil component and at least one ester component, in a ratio by weight of mineral oil/ester of at least 95:05 and more generally in the range of 90:10 to 30:70 respectively. In embodiments the weight/weight ratio between the refined mineral oil component and the ester component may be 80:20, 70:30; 60:40 or 50:50.

The wording "refined mineral oil" it is intended to refer to a refined product obtained from petroleum distillation and/or other refining processes. The refined product purity grade requirement will depend on the final application of the extended elastomer; for example, technical items for medical or food contact and drinking water applications may require oils with parameters specified by main pharmacopeias (EUP, USP, etcetera) or FDA.

According tothe present invention, the mineral oils include at least one of:
- petroleum distillates, such as: hydrotreated heavy paraffinic; solvent-dewaxed or refined heavy paraffinic; hydrotreated heavy naphthenic; hydrotreated middle; hydrotreated light paraffinic; hydrotreated light naphthenic; solvent-dewaxed or refined light paraffinic;
   - residual oils form petroleum, such as hydrotreated and solvent refined;
   - petroleum residues solvent-dewaxed;
   - lubricating oils from petroleum;
   - white mineral oil from petroleum;
   - hydrocarbons C₁₈-C₂₄ iso-alkanes containing less than 2% (by weight) of aromatics (<2% aromatics).

Suitable mineral oils are commercially available and can be identified by different CAS numbers such as, for example, the ones in the following list: Distillates (petroleum), hydrotreated heavy paraffinic CAS: 64742-54-7; Distillates (petroleum), solvent-dewaxed heavy paraffinic CAS: 64742-65-0; Distillates (petroleum), hydrotreated heavy naphthenic CAS: 64742-52-5; Distillates (petroleum), hydrotreated middle CAS: 64742-46-7; Distillates (petroleum), hydrotreated light naphthenic CAS: 64742-53-6; Distillates (petroleum), solvent-dewaxed light paraffinic CAS: 64742-56-9; Distillates (petroleum), solvent-refined light paraffinic CAS: 64741-89-5; Distillates (petroleum), hydrotreated light paraffinic CAS: 64742-55-8; Residual oils (petroleum), hydrotreated CAS 64742-57-0; Residual oils (petroleum), solvent refined CAS : 64742-01-4; Residues (petroleum), solvent dewaxed CAS 64742-62-7; Lubricating oils (petroleum), C24-50, solvent-extd., dewaxed, hydrogenated CAS: 101316-72-7; Lubricating oils (petroleum), C>25, solvent-extracted, deasphalted, dewaxed, hydrogenated CAS: 101316-69-2; White mineral oil (petroleum) CAS 8042-47-5; Hydrocarbons C18-C24 iso-alkanes <2% aromatics EC 940-734-7.

The term "ester component" indicates a product derived by the synthetic (or enzymatic) coupling of an alcohol with a carboxylic acid or a derivative thereof such an anhydride, an acyl halide and the like. The esters used in this invention are not detrimental to the environment; they are readily biodegradable according to OECD 301B Method and they have a significant percentage of renewability. Suitable ester substances may be rapidly degraded by microorganisms in both the aquatic and terrestrial environments. The ester substance in the mixture represents the environmental friendly component of the mixtures of the invention.

The ester substances used in the invention comprise a portion deriving from an alcohol and a portion derived from an acid. The ester is obtainable from the reaction of at least one alcohol, selected from linear or branched C₆-C₁₅ alkane mono-alcohols, linear or branched polyols C₂-C₆, with at least one acid, selected from linear or branched, mono or dicarboxylic C₄-C₂₀ acids, preferably C₈-C₂₀ acids, or derivatives of said acid suitable to react with the selected alcohol. Suitable acid derivatives are acid anhydrides.

In a preferred embodiment the ester substances of the invention mixture to be used with EPDM and elastomers such as EPDM are saturated esters or esters having a low degree of insaturation (measured as Iodine value according to ASTM D5554). In other words, these esters have a degree of unsaturation of 5 (i.e. 5 gI₂/100g of ester) or less, preferably about 3.5 or less, about 3.0 or less; lower values of Iodine number for suitable of 0.5 or less, and 0.1 or less. The ester substances having said unsaturation values have shown to possess an excellent miscibility with the mineral oil fraction of the mixture and a high compatibility with the above cited elastomers. According to an aspect of the invention, the ester substances of the invention to be used with EPDM and elastomers such as EPDM, are apolar.

According to another aspect of the invention, ester components carrying some unsaturation degree in their carbon chain portion, can be effectively employed with elastomer such as SBS. In particular, it was found that esters having an unsaturation degree, measured as Iodine value (ASTM D5554), may be used with SBS rubbers; in a possible embodiment the degree of insaturation is about 80, preferably about 50 or less, more preferably about 20 or less and most preferably of about 10 or less (10 gI₂/100g ester substance).

According to a preferred embodiment, the alcohols used to obtain ester components may include: linear or branched C₆-C₁₅ alkane mono-alcohols; linear or branched polyols C₂-C₆.

Alcohols used in the present invention are selected from: ethylhexyl alcohol; isodecyl alcohol; n-decyl alcohol; isotridecyl alcohol; tridecyl alcohol; neopentylglycol; glycerol; trimethylolpropane; pentaerythrityl alcohol; and glycols. Even more preferred is pentaerythrityl alcohol.

Preferred acids are saturated linear or branched, mono or dicarboxylic C₄-C₂₀ carboxylic acids. Preferred carboxylic acids are selected from alkyl, alkenyl, alkynyl, aromatic, non-aromatic cyclic carboxylic acids.

According to the present invention said carboxylic acids are selected from: caprylic acid; pelargonic acid; capric acid; caprylic/capric acid (mixture of C₈-C₁₀ fatty acids); lauric acid; coconut acid (mixture of C₆-C₁₂ fatty acids); palmitic acid; stearic acid and isostearic acid. A preferred acid is isostearic acid.

According to an embodiment, acid derivatives may be used, particularly anhydrides; suitable anhydrides are chosen from the condensed aromatic anhydrides, particularly preferred are the phthalic anhydride and the trimellitic anhydride. According to another embodiment, the invention esters can be Medium Chain Triglycerides (MCTs).

As previously stated the ester of the invention can preferably derive from the coupling of one of the listed alcohol with one of the listed acids or derivatives thereof to provide an ester having the selected alcohol portion and acid portion. Said coupling is well known to the skilled in the art. Any other suitable chemical reaction may be anyway carried out, provided it results in the ester component as herein disclosed.

According to an embodiment, the ester of the invention is selected from the following list, where also CAS identification numbers are reported: Heptanoic acid, ester with 2,2-dimethyl-1,3-propanediol CAS 68855-18-5; 2,2-dimethyl-1,3-propanediyl dioctanoate CAS 31335-74-7; 1,3-Propoanediol, 2,2-dimethyl-, C5-9 carboxylates CAS 85711-80-4; Decanoic acid, mixed esters with neopentyl glycol and octanoic acid CAS 70693-32-2; Fatty acids, C8-18 and C18-unsatd., esters with neopentyl glycol CAS 85186-86-3; Fatty acids, C12-16, esters with neopentyl glycol CAS 85186-95-4; Fatty acids, coco, 2,2-dimethyl-1,3-propanediyl esters CAS 91031-85-5; Fatty acids, C6-18, 2,2-dimethyl-1,3-propanediyl esters CAS 91031-27-5; 2,2-dimethyl-1,3-propanediyl dioleate CAS 42222-50-4; 9-Octadecenoic acid (Z)-, ester with 2,2-dimethyl-1,3-propanediol CAS 67989-24-6; Neopentyl Glycol Diisostearate (Fatty acids, C14-18 and C18-unsatd., branched and linear, esters with neopentyl glycol) CAS 85005-25-0; 2-ethyl-2-[[(1-oxoheptyl)oxy]methyl]propane-1,3-diyl bisheptanoate CAS 78-16-0; Fatty acids, C6-18, triesters with trimethylolpropane CAS 91050-88-3; Fatty acids, C8-10, mixed esters with neopentyl glycol and trimethylolpropane CAS 97281-24-8; Fatty acids, C7-8, triesters with trimethylolpropane 189120-64-7; Decanoic Fatty acids, 8-10 (even numbered), di- and triesters with propylidynetrimethanol CAS 11138-60-6; Fatty acids, C8-10, triesters with trimethylolpropane CAS 91050-89-4; Fatty acids, coco, triester with trimethylolpropane CAS 85566-29-6; Fatty acids, C8-10(even), C14-18(even) and C16-18(even)-unsatd., triesters with trimethylolpropane (CAS Formerly 85186-89-6); Fatty acids, C16-18 and C18-unsatd., branched and linear ester with trimethylolpropane CAS 403507-18-6; Fatty acids, C14-18 and C16-18 unsatd., triesters with trimethylolpropane CAS 68002-79-9; Fatty acids, C16-18 (even numbered) and C18-unsatd., branched and linear, di and triesters with trimethylolpropane (CAS Formerly 85005-23-8) EC 931-531-4; Fatty acids, C16-18, triesters with trimethylolpropane CAS 91050-90-7; Fatty acids, C16-18 and C18 unsatd., triesters with trimethylolpropane CAS 68002-78-8; Fatty acids, C16-18, even numbered and C18-unsatd. triesters with Propylidynetrimethanol (CAS Formerly 57675-44-2) EC 931-461-4; Fatty acids, C14-18 and C16-18-unsatd., mixed esters with neopentyl glycol and trimethylolpropane CAS 85186-92-1; 2-ethyl-2-(((1-oxoisooctadecyl) oxy)methyl)-1,3-propanediyl bis (isoocta decanoate) CAS 68541-50-4; 2,2-bis[[(1-oxopentyl)oxy]methyl] propane-1,3-diyl divalerate CAS 15834-04-5; Fatty acids, C16-18 (even numbered), esters with pentaerythritol CAS 85116-93-4; Fatty acids, C16-18 and C18-unsatd., esters with pentaerythritol CAS 85711-45-1; 2,2-bis(hydroxymethyl)-1,3-propanediyl dioleate CAS 25151-96-6; Fatty acids, C5-9 tetraesters with pentaerythritol CAS 67762-53-2; Reaction mass of Heptanoic acid 3-pentanoyloxy-2,2-bis-pentanoyloxymethyl-propyl ester, Heptanoic acid 2-heptanoyloxymethyl-3-pentanoyloxy-2-pentanoyloxymethyl-propyl ester and Heptanoic acid 3-heptanoyloxy-2-heptanoyloxymethyl-2-pentanoyloxymethyl-propyl ester (CAS Formerly 68441-94-1); Tetraesters from esterification of pentaerythritol with pentanoic, heptanoic and isononanoic acids (CAS Formerly 68424-30-6); Pentaerythritol ester of pentanoic acids and isononanoic acid CAS 146289-36-3; Pentaerythritol tetraesters of n-decanoic, n-heptanoic, n-octanoic and n-valeric acids CAS 68424-31-7; Tetra-esterification products of C5, C7, C8, C10 fatty acids with pentraerythritol CAS 68424-31-7; Fatty acids, C7, C8, C10 and 2-ethylhexanoic acid, tetraesters with pentaerythritol CAS 68424-31-7; Decanoic acid, mixed esters with heptanoic acid, octanoic acid, pentaerythritol and valeric acid CAS 71010-76-9; Decanoic acid, mixed esters with octanoic acid and pentaerythritol CAS 68441-68-9; Fatty acids, C8-10, tetraesters with pentaerythritol CAS 85586-24-9; Fatty acids, C8, C10, C12, C14, C16 esters with pentaerythritol, reaction product of coconut oil fatty acids, C8-C10 fatty acid mix and Pentaerythritol CAS 85049-33-8; Fatty acids, C16-18, tetraesters with pentaerythritol CAS 91050-82-7; Pentaerytritol tetraoleate CAS 19321-40-5; Fatty acids, C16-18 and C18-unsatd., tetraesters with pentaerythritol CAS 68604-44-4; 2,2-bis[[(1-oxoisooctadecyl)oxy]methyl]-1,3-propanediyl bis (isooctadecanoate) CAS 62125-22-8; Fatty acids, lanolin, esters with pentaerythritol CAS 68440-09-5; Fatty acids, C5-9, mixed esters with dipentaerythritol and pentaerythritol CAS 85536-35-2; Fatty acids, C8-10 mixed esters with dipenaterythritol, isooctanoic acid, pentaerythritol and tripentaerythritol CAS 189200-42-8; 2-ethylhexyl palmitate CAS 29806-73-3; Phenol, dodecyl-, branched, sulfurized 96152-43-1; Fatty acids, C8-10, mixed esters with adipic acid and trimethylolpropane CAS 95912-89-3.

Preferred ester oils are the compound identified with CAS 85186-89-6, EC name: Fatty acids, C8-18 and C18-unsatd.; esters with trimethylolpropane, Iodine value ≤ 10 gI₂/100g (ASTM D5554), and the saturated compound CAS 62125-22-8, pentaerythrityl tetraisostearate (also known as isooctadecanoic acid tetraester with pentaerythritol). As previously discussed, the compound carrying the said unsaturation degree is particularly appropriate for use with rubbers like SBS; saturated compound is, instead, particularly suited to be used with EPDM.

The processing oil of the invention is formed by a mixture comprising at least one refined mineral oil derived from petroleum, as previously listed, and at least one ester component as above described; the second component being a more environmentally friendly molecule or substance. As said, the mixture comprises at least one refined mineral oil and at least one ester component, in a relative weight/weight ratio mineral oil:ester that is at least 95:05 and preferably in the range from 90:10 to 30:70 respectively, preferably 80:20, 70:30; 60:40 or 50:50.

Preferred mixtures are:
i.a mixture (A) of hydrotreated heavy paraffinic CAS: 64742-54-7 with 2,2-bis[[(1-oxoisooctadecyl)oxy]methyl]-1,3-propanediyl bis(isooctadecanoate) CAS: 62125-22-8 in a ratio by weight from 90:10 to 30:70, particularly 80:20 to 60:40 (mineral oil:ester);
ii.a mixture (B) of white mineral oil from petroleum CAS: 8042-47-5 and 2,2-bis^{/}[[(1-oxoisooctadecyl)oxy]methyl]-1,3-propanediyl bis(isooctadecanoate) CAS: 62125-22-8 (i.e. isooctadecanoic acid tetraester with pentaerythritol) in a ratio by weight from 90:10 to 30:70, particularly 80:20 to 60:40 (mineral oil:ester);
iii.a mixture (C) of hydrotreated heavy paraffinic CAS: 64742-54-7 with the Fatty acids, C8-18 and C18-unsatd., esters with trimethylolpropane (CAS 85186-89-6) in a ratio by weight from 90:10 to 30:70, particularly 80:20 to 60:40 (mineral oil:ester);

According to a preferred embodiment, the processing oil of the invention has the following physico-chemical characteristics:
colour: uncoloured/slightly yellow
viscosity at 40°C: 20<mm²/s<160
density at 15°C: >0.850 kg/L (850.0 kg/m³), preferably < 0.990 kg/L (990.0 kg/m³)
flash point PM: >200°C, preferably >250°C
pour point: <-6°C, preferably <-9°C

Those characteristics are measured, for example, by following the relevant ASTM methods that are reported in the Experimental Section.

The values of the viscosity range are related to the fact that this characteristic defines the type of polymer the ingredient and/or extender oil has to be used with, the use for which the extended elastomer is employed and the final product to be made. Rubber items such as gaskets and sliding belts are normally produced by using for example EPDM/EPR and oils with a viscosity at 40°C around 90-160 mm²/s; in the production of technical apparatus in the pharmaceutical/health care field (*e.g.* drinking water tubes, rubber caps) the commonly used white oils to be mixed with suitable elastomers are provided with a viscosity at 40°C of about 70-75 mm²/s; for production of the technical items that typically needs extension oils with a viscosity at 40°C around 20.5-25 mm²/s which allows a good workability with polymers like SBS and the like (*i.e.* shoe soles, indirect food contact items).

The mixture of the invention can include more than one refined mineral oil and/or more than one ester substances.

The mixture of the invention can be used as production and extender oil in polymer compounding processes, particularly with elastomers. The term "extended elastomer" or "extended rubber" herein indicates the elastomer or polymer mixed with the extender/processing oils. The term "final product" is herein used to indicate the final item produced using the extended elastomer or polymer.

The advantages of the new processing oil mixtures of the invention are related to their ability to perform as the currently used oils based only on refined mineral oils, in particular in terms of compatibility with the rubber/elastomer polymer. The mixture of the invention, in fact, is well incorporated into the polymer, preventing a migration of the oil to the surface of the final product. Said polymer can be also pre-mixed with conventional extender oils. The production process of elastomer presents Mooney viscosity comparable to traditional ones, as well as flexibility values of obtained elastomers. The final products are stable in time, showing good performances in terms of UV, heat and thermo-oxidative ageing.

The mixture of the invention may include lightly coloured vegetable oils (particularly light yellow oils) and a white oil, to provide a lightly coloured to uncoloured oil mixture that is free from unpleasant smell; said mixture can advantageously be used in the food and healthcare industries with white/transparent elastomers.

As far as the handling hazard is concerned, the mixtures of the invention are safe thanks to their high flash point (preferably > 200°C as measured by Pensky Martens method) and their low volatility, with low impact on work environment, thus enhancing the workability of the final product. Lastly, the new processing mixture of the invention is also suitable in the case it is required to disperse solid additives into the rubber compound (e.g. Carbon black).

The quantity of processing mixture to be used in the elastomer compounding process will depend on the type of polymer used, the process to be performed, the product to be made, the technology and plant used, etcetera. **In** general, the amount of the mixture to be used in a certain polymer is substantially the same as the amount of mineral oil that is known to be used for that polymer and final product. The skilled in the art of elastomer compounding is therefore able to establish the correct mixture amount to be used following the common manufacturing practices, also taking into account the starting polymer composition that can be pure rubber or, in some cases, an already extended elastomer. By way of example, in the literature, values around 20-50% weight/weight on the total mixture are suitable amounts of processing oil to be used, especially for EPDM rubbers.

As mentioned, the use of a vegetable and/or completely biodegradable oil as the only extension oil in the compounding process of natural and synthetic rubbers, does not allow to achieve the same technical performances obtained using only the conventional mineral processing oils.

The mixtures of the invention represent an excellent technical, environmental and economic compromise. By using the mixtures of the invention for the production of polymers, production and processing of natural and synthetic rubbers, production of plastics and resins, including adhesives, it allows to have a biodegradable component in a final product, maintaining technical performance and durability, with an affordable cost.

Nowadays, plastics are produced in huge amount in EU (62 Mln tons/years in EU in 2018 *- Plastic Europe Data*) and the consumption of mineral oils involved in the aforementioned uses counts millions of tons per year in Europe alone. Having a percentage, even limited, of biodegradable oil in final products would represent a significant saving of CO₂ emissions into the environment and a lower demand of fossil oils.

More than one mixture of the invention can be used in the elastomer compounding process. The use of the mixture of the invention, as processing/extender oil in elastomer compounding processes, is a further object of the invention.

The mixture can be added either to non-extended elastomers (dry rubber) or to already extended elastomers, provided that in the final amount of the mixture components the ratio of refined mineral oil:ester is at least 95:05 and preferably in the range from 90:10 to 30:70 respectively, preferably 80:20, 70:30; 60:40 or 50:50.

According to another of its aspects, the invention relates to a process for extending at least an elastomer, which comprises the addition of a mixture of the invention to at least one elastomer, according to claim 8. The process involves the presence of the new mixture as extension oil additive.

The use of the new mixture as processing/extending oil for elastomer compounding is a further object of the present invention.

An item produced starting from a composition of an elastomer extended/plasticized with the new processing oil mixture of the invention is another object of the present invention.

An elastomer extended with at least a mixture of the invention is another object of the present invention.

The invention will be further disclosed with reference to the following non-limiting examples.

### EXPERIMENTAL SECTION

### Characterization of processing oils

Nine different processing oil mixtures according to the invention were prepared and characterized as reported in Table 1 and Table 2 respectively.

The tests were performed following the ASTM methods, specific test codes are reported in the related column.

**Table 1: processing oil according to the invention compositions**

| **Component** | **CAS** | **M-1** | **M-2** | **M-3** | **M-4** | **M-5** | **M-6** | **M-7** | **M-8** | **M-9** |
|---|---|---|---|---|---|---|---|---|---|---|
| Distillates (petroleum), hydrotreated heavy paraffinic | 64742-54-7 | 80% | 60% | 35% | - | - | - | 70% | 70% | - |
| White mineral oil (petroleum) | 8042-47-5 | - | - | - | 80% | 60% | 35% | - | - | - |
| Hydrocarbons, C18-C24, iso-alkanes <2% aromatics | 940-734-7 | - | - | - | - | - | - | - | - | 50% |
| 2,2-bis[[(1-oxoisooctadecyl)oxy]meth yl]-1,3-propanediyl bis(isooctadecanoate) | 62125-22-8 | 20% | 40% | 65% | 20% | 40% | 65% | 30% | - | 50% |
| Fatty acids, C8-18 and C18-unsatd., esters with trimethylolpropane | 85186-89-6 | - | - | - | - | - | - | - | 30% | - |

**Table 2: physico-chemical characterization**

| **Characteristic** | **ASTM method** | **M-1** | **M-2** | **M-3** | **M-4** | **M-5** | **M-6** | **M-7** | **M-8** | **M-9** |
|---|---|---|---|---|---|---|---|---|---|---|
| Color | D1500 | L 1.5 | 1.5 | L 1.5 | - | - | - | - | - | - |
| Color Saybolt | D156 | - | - | - | +29 | +27 | +24 | +28 | +27 | +22 |
| Density at 15°C (g/mL) | D4052 | 0.8932 | 0.9018 | 0.9017 | 0.8720 | 0.8826 | 0.8959 | 0.8674 | 0.8673 | 0.8565 |
| Viscosity at 40°C (mm²/s) | D445 | 141.0 | 141.8 | 142.5 | 70.4 | 70.5 | 74.5 | 34.3 | 24.2 | 23.3 |
| Pour point (°C) | D997 | -9 | -10 | -12 | -15 | -15 | -30 | -18 | -9 | -10 |
| Flash point Pensky Martens (°C) | D93 | 252.5 | 258 | 254.5 | 221.0 | 220.0 | 216.0 | - | - | - |
| Flash point Cleveland open cup (°C) | D92 | - | - | - | - | - | - | 226 | 212 | 182 |

Mixtures from M-1 to M-3 were used as process oils for EPR/EPDM, mixtures from M-4 to M-6 with EPR/EPDM, SBS, SEBS, mixtures from M-7 to M-9 were employed with SBS.

As comparative samples, three mixtures, not according to the invention, reported in Table 3 were used. The three samples were chosen between other possibilities reported in literature of "green" products useful for a possible replacement of the less environmentally friendly petrol derivatives.

In particular, M-10 contains an unsaturated chain, M-11 does not contain the mineral oil fraction (*i.e.* the paraffinic extension oil is 100% replaced by esters), M-12 contains a vegetable oil waste derivative.

**Table 3: processing oils not according to the invention compositions**

| **Component** | **CAS** | **M-10** | **M-11** | **M-12** |
|---|---|---|---|---|
| Distillates (petroleum), hydrotreated heavy paraffinic | 64742-54-7 | 50% | - | - |
| Extracts (petroleum), solvent-refined heavy paraffinic distillate solvent | 68783-04-0 | - | - | 50% |
| Fatty acids, coco, adipic, triesters with trimethylolpropane | N.A. | 38% | 52% | - |
| Fatty acids, C18-unsatd., diesters and triesters with trimethylolpropane | 335202-94-2 | 12% | 48% | - |
| Vegetable oil derived from the waste of thistle processing | N.A. | - | - | 50% |

All the processing oils according to the invention demonstrate good or very good performances when added to the corresponding elastomer to be extended and treated with the usual process conditions; *i.e.* the extension oil was completely absorbed by the polymer mass and no exudate appeared on the surface of the final product. M-1 and M-4 in particular show that the invention oil mixture provides the same extension capacity and Mooney viscosity as that of the refined mineral oil used alone (100%) and that the same values of the extended elastomer were registered in terms of flexibility as those of the refined mineral oil used alone (100%).

Satisfying results were also obtained in terms of no release of unpleasant odour and overall colour shade and uniformity in the mass. In particular M-7, M-8 and M-9 were employed to mould white shoe soles using SBS and the products were confirmed to be of a good quality and such that they did not give rise to yellowing of the treated elastomer over time and after UV exposition.

M-10, M-11 and M-12, on the contrary, did not meet the necessary requirements for their use as extending oils. In particular, M-10 and M-11 are not compatible with EPDM and were not absorbed by the polymer mass.

M-12 was tested using a nitrile rubber (NBR) and, also in this case, the process could not be carried out because of the low miscibility of the polymer and the extension oil that resulted in rubber granules too sticky to be processed.

Indeed, the processing oils of the invention demonstrate to be highly reliable, also in comparison with other "green" alternatives, when employed for the extension of different types of rubber, production of polymers, production and processing of natural and synthetic rubbers, production of plastics and resins, including adhesives and they can be considered full alternatives to the commonly employed refined mineral oils.

## Claims

1. A processing oil for compounding an elastomer selected from EPDM (ethylene/propylene/diene terpolymers), EPR (ethylene/propylene copolymers), SBS (Styrene/Butadiene/Styrene), SEBS (Styrene/Ethylene/Butadiene/Styrene), SBC (Saturated Styrenic Block Copolymer), BR (Polybutadiene), IR (Polyisoprene), comprising at least one refined mineral oil component selected from:
a. petroleum distillates, such as: hydrotreated or solvent de-waxed or refined heavy paraffinic; hydrotreated heavy naphthenic; hydrotreated middle; hydrotreated light paraffinic; hydrotreated light naphthenic; solvent dewaxed or refined light paraffinic;
b. residual oils from petroleum, such as hydrotreated and solvent refined;
c. petroleum residues solvent-dewaxed;
d. lubricating oils from petroleum;
e. white mineral oil from petroleum;
f. hydrocarbons C₁₈-C₂₄ iso-alkanes <2% aromatics;
or mixtures thereof, and least one ester component, the ratio mineral oil/ester (weight/weight) being within a range of 95:05 to 30:70;
wherein said ester component is or comprises at least one ester substance as obtainable from the reaction of:
- at least one alcohol selected from: ethylhexyl alcohol, isodecyl alcohol, n-decyl alcohol, isotridecyl alcohol, tridecyl alcohol, neopentylglycol, glycerol, trimethylolpropane, pentaerythrityl alcohol, glycol; and
- at least one acid or acid derivative selected from: caprylic acid, pelargonic acid, capric acid, caprylic/capric acid being a mixture of C8-C10 fatty acids, lauric acid, coconut acid being a mixture of C6-C12 fatty acids, palmitic acid, stearic acid, isostearic acid, trimellitic anhydride;
or wherein said ester component is or comprises Fatty acids, C8-18 and C18-unsatd., esters with trimethylolpropane (CAS 85186-89-6).

2. The processing oil according to claim 1, wherein said refined mineral oil component is or comprises petroleum distillate heavy paraffinic CAS: 64742-54-7.

3. The processing oil according to any previous claim wherein the ester component is or comprises 2,2-bis[[(1-oxoisooctadecyl)oxy]methyl]-1,3-propanediyl bis(isooctadecanoate) (CAS: 62125-22-8).

4. The processing oil according to any previous claim wherein the ratio by weight refined mineral oil:ester is in the range from 90:10 to 35:65 respectively, preferably in the range of 85:15 to 50:50.

5. The processing oil of claim 4 wherein the mineral oil is heavy paraffinic (CAS: 64742-54-7) and the ester component is 2,2-bis[[(1-oxoisooctadecyl)oxy]methyl]-1,3-propanediyl bis(isooctadecanoate) (CAS: 62125-22-8).

6. The processing oil of claim 5, wherein the ratio of refined mineral oil:ester is 80:20.

7. The use of the processing oils according to any of claims 1-6 for compounding an elastomer selected from EPDM (ethylene/propylene/diene terpolymers), EPR (ethylene/propylene copolymers), SBS (Styrene/Butadiene/Styrene), SEBS (Styrene/Ethylene/Butadiene/Styrene), SBC (Saturated Styrenic Block Copolymer), BR (Polybutadiene), IR (Polyisoprene).

8. A process of production of elastomers selected from EPDM (ethylene/propylene/diene terpolymers), EPR (ethylene/propylene copolymers), SBS (Styrene/Butadiene/Styrene), SEBS (Styrene/Ethylene/Butadiene/Styrene), SBC (Saturated Styrenic Block Copolymer), BR (Polybutadiene), IR (Polyisoprene), comprising the step of mixing said elastomers with a processing oil including mineral oil component and an ester component according to any of claims 1-6.

9. The process of claim 8, wherein said elastomer is EPDM and said ester component is a saturated ester, preferably the isooctadecanoic acid tetraester with pentaerythritol (CAS: 62125-22-8).

10. An elastomer selected from EPDM (ethylene/propylene/diene terpolymers), EPR (ethylene/propylene copolymers), SBS (Styrene/Butadiene/Styrene), SEBS (Styrene/Ethylene/Butadiene/Styrene), SBC (Saturated Styrenic Block Copolymer), BR (Polybutadiene), IR (Polyisoprene), extended with a processing oil including mineral oil component and an ester component according to any of claims 1 to 6.

11. An elastomer according to claim 10, wherein said elastomer is EPDM and said ester substance has a degree of unsaturation, measured according to ASTM D5554, of 5.0 or less, preferably 3.5 or less.

12. An elastomer according to claim 10 or 11, wherein said elastomer is EPDM, said ester component is 2,2-bis[[(1-oxoisooctadecyl)oxy]methyl]-1,3-propanediyl bis(isooctadecanoate) (CAS: 62125-22-8) and said mineral oil is petroleum distillate heavy paraffinic (CAS: 64742-54-7).

13. An elastomer according to claim 12 wherein the ratio by weight of mineral oil:ester is in a range from 90:10 to 35:65, preferably in the range of 85:15 to 75:25.

## Patentansprüche

1. Ein Verarbeitungsöl zum Compoundieren eines Elastomers, ausgewählt aus EPDM (Ethylen/Propylen/Dien-Terpolymere), EPR (Ethylen/Propylen-Copolymere), SBS (Styrol/Butadien/Styrol), SEBS (Styrol/Ethylen/Butadien/Styrol), SBC (gesättigte styrolische Blockcopolymere), BR (Polybutadien), IR (Polyisopren), umfassend mindestens eine raffinierte Mineralölkomponente, ausgewählt aus:
a. Erdöldestillaten, wie: hydrierte oder lösungsmittel-entparaffinierte oder raffinierte schwere paraffinische; hydrierte schwere naphthenische; hydrierte mittlere; hydrierte leichte paraffinische; hydrierte leichte naphthenische; lösungsmittel-entparaffinierte oder raffinierte leichte paraffinische;
b. Ölrückständen aus Erdöl, wie hydrierte und lösungsmittelraffinierte;
c. lösungsmittel-entparaffinierte Erdölrückständen;
d. Schmierölen aus Erdöl;
e. weißem Mineralöl aus Erdöl;
f. Kohlenwasserstoffen C18-C24 Iso-Alkanen <2 % Aromaten;
oder deren Mischungen, und mindestens eine Esterkomponente, wobei das Verhältnis Mineralöl/Ester (Gewicht/Gewicht) im Bereich von 95:05 bis 30:70 liegt;
wobei die Esterkomponente mindestens ein Esterstoff ist oder dieses umfasst, wie er erhältlich ist aus der Reaktion von:
- mindestens einem Alkohol, ausgewählt aus: Ethylhexylalkohol, Isodecylalkohol, n-Decylalkohol, Isotridecylalkohol, Tridecylalkohol, Neopentylglycol, Glycerin, Trimethylolpropan, Pentaerythritalkohol, Glycol; und
- mindestens einer Säure oder einem Säurederivat, ausgewählt aus:
Caprylsäure, Pelargonsäure, Caprinsäure, Capryl/Caprinsäure als Gemisch aus C8-C10-Fettsäuren, Laurinsäure, Kokosfettsäure als Gemisch aus C6-C12-Fettsäuren, Palmitinsäure, Stearinsäure, Isostearinsäure, Trimellithsäureanhydrid;
oder wobei die Esterkomponente Fettsäuren, C8-18 und C18-ungesättigt, Ester mit Trimethylolpropan (CAS 85186-89-6) ist oder diese umfasst.

2. Das Verarbeitungsöl nach Anspruch 1, wobei die raffinierte Mineralölkomponente petroleumdestillat schwer paraffinisch CAS: 64742-54-7 ist oder umfasst.

3. Das Verarbeitungsöl nach einem der vorhergehenden Ansprüche, wobei die Esterkomponente 2,2-bis[[(1-Oxoisooctadecyl)oxy]methyl]-1,3-propanediyl-bis(isooctadecanoat) (CAS: 62125-22-8) ist oder dieses umfasst.

4. Das Verarbeitungsöl nach einem der vorhergehenden Ansprüche, wobei das Gewichtsverhältnis raffiniertes Mineralöl:Ester im Bereich von 90:10 bis 35:65 liegt, vorzugsweise im Bereich von 85:15 bis 50:50.

5. Das Verarbeitungsöl nach Anspruch 4, wobei das Mineralöl schwer paraffinisch (CAS: 64742-54-7) ist und die Esterkomponente 2,2-bis[[(1-Oxoisooctadecyl)oxy]methyl]-1,3-propanediyl-bis(isooctadecanoat) (CAS: 62125-22-8) ist.

6. Das Verarbeitungsöl nach Anspruch 5, wobei das Verhältnis raffiniertes Mineralöl:Ester 80:20 beträgt.

7. Verwendung der Verarbeitungsöle nach einem der Ansprüche 1 bis 6 zum Compoundieren eines Elastomers, ausgewählt aus EPDM (Ethylen/Propylen/Dien-Terpolymere), EPR (Ethylen/Propylen-Copolymere), SBS (Styrol/Butadien/Styrol), SEBS (Styrol/Ethylen/Butadien/Styrol), SBC (gesättigte styrolische Blockcopolymere), BR (Polybutadien), IR (Polyisopren).

8. Verfahren zur Herstellung von Elastomeren, ausgewählt aus EPDM (Ethylen/Propylen/Dien-Terpolymere), EPR (Ethylen/Propylen-Copolymere), SBS (Styrol/Butadien/Styrol), SEBS (Styrol/Ethylen/Butadien/Styrol), SBC (gesättigte styrolische Blockcopolymere), BR (Polybutadien), IR (Polyisopren), umfassend den Schritt des Mischens der Elastomere mit einem Verarbeitungsöl, das eine Mineralölkomponente und eine Esterkomponente gemäß einem der Ansprüche 1 bis 6 umfasst.

9. Verfahren nach Anspruch 8, wobei das Elastomer EPDM ist und die Esterkomponente ein gesättigter Ester ist, vorzugsweise das Isooctadecansäure-Tetraester mit Pentaerythritol (CAS: 62125-22-8).

10. Elastomer, ausgewählt aus EPDM (Ethylen/Propylen/Dien-Terpolymere), EPR (Ethylen/Propylen-Copolymere), SBS (Styrol/Butadien/Styrol), SEBS (Styrol/Ethylen/Butadien/Styrol), SBC (gesättigte styrolische Blockcopolymere), BR (Polybutadien), IR (Polyisopren), verlängert mit einem Verarbeitungsöl, das eine Mineralölkomponente und eine Esterkomponente gemäß einem der Ansprüche 1 bis 6 umfasst.

11. Elastomer nach Anspruch 10, wobei das Elastomer EPDM ist und der Esterstoff einen Unsättigungsgrad von 5,0 oder weniger, vorzugsweise 3,5 oder weniger aufweist, gemessen nach ASTM D5554.

12. Elastomer nach Anspruch 10 oder 11, wobei das Elastomer EPDM ist, die Esterkomponente 2,2-bis[[(1-Oxoisooctadecyl)oxy]methyl]-1,3-propanediyl-bis(isooctadecanoat) (CAS: 62125-22-8) ist und das Mineralöl Petroleumdestillat schwer paraffinisch (CAS: 64742-54-7) ist.

13. Elastomer nach Anspruch 12, wobei das Gewichtsverhältnis Mineralöl:Ester im Bereich von 90:10 bis 35:65 liegt, vorzugsweise im Bereich von 85:15 bis 75:25.

## Revendications

1. Huile de traitement pour le mélange d'un élastomère choisi parmi les EPDM (terpolymères éthylène/propylène/diène), EPR (copolymères éthylène/propylène), SBS (styrène/butadiène/styrène), SEBS (styrène/éthylène/butadiène/styrène), SBC (copolymère styréniques séquencés saturés), BR (polybutadiène), IR (polyisoprène), comprenant au moins un composant d'huile minérale raffinée choisi parmi les éléments suivants :
a. distillats de pétrole, tels que : paraffiniques lourds hydrotraités ou déparaffinés au solvant ou raffinés ; naphténiques lourds hydrotraités ; intermédiaires hydrotraités ; paraffiniques légers hydrotraités ; naphténiques légers hydrotraités ; paraffiniques légers déparaffinés au solvant ou raffinés ;
b. huiles résiduelles de pétrole, telles qu'hydrotraitées et raffinées au solvant ;
c. résidus de pétrole déparaffinés au solvant ;
d. huiles lubrifiantes dérivées du pétrole ;
e. huile minérale blanche dérivée du pétrole ;
f. hydrocarbures C₁₈-C₂₄ iso-alcanes <2% d'aromatiques ;
ou leurs mélanges, et au moins un composant ester, le rapport huile minérale/ester (poids/poids) étant compris entre 95:05 et 30:70;
dans lequel ledit composant ester est ou comprend au moins une substance ester telle qu'elle peut être obtenue par la réaction de :
- au moins un alcool choisi parmi : l'alcool éthylhexyle, l'alcool isodécyle, l'alcool n-décyle, l'alcool isotridécyle, l'alcool tridécyle, le néopentylglycol, le glycérol, le triméthylolpropane, l'alcool pentaérythritylique, le glycol ; et
- au moins un acide ou un dérivé d'acide choisi parmi : l'acide caprylique, l'acide pélargonique, l'acide caprique, l'acide caprylique/caprique étant un mélange d'acides gras C8-C10, l'acide laurique, l'acide de coco étant un mélange d'acides gras C6-C12, l'acide palmitique, l'acide stéarique, l'acide isostéarique, l'anhydride trimellitique ;
ou dans laquelle ledit composant ester est ou comprend des acides gras, C8-18 et C18 non saturés, esters avec le triméthylolpropane (CAS 85186-89-6).

2. Huile de traitement selon la revendication 1, dans laquelle ledit composant d'huile minérale raffinée est ou comprend du distillat de pétrole paraffinique lourd CAS : 64742-54-7.

3. Huile de traitement selon l'une quelconque des revendications précédentes, dans laquelle le composant ester est ou comprend 2,2-bis[[(1-oxoisooctadécyl)oxy]méthyl]-1,3-propanediylbis(isooctadécanoate) (CAS : 62125-22-8).

4. Huile de traitement selon l'une quelconque des revendications précédentes dans laquelle le rapport pondéral huile minérale raffinée/ester est compris entre 90/10 et 35/65, de préférence entre 85/15 et 50/50.

5. Huile de traitement de la revendication 4, dans laquelle l'huile minérale est une paraffine lourde (CAS : 64742-54-7) et le composant ester est le 2,2-bis[[(1-oxoisooctadécyl)oxy]méthyl]-1,3-propanediyle bis(isooctadécanoate) (CAS : 62125-22-8).

6. Huile de traitement selon la revendication 5, dans laquelle le rapport huile minérale raffinée/ester est de 80/20.

7. Utilisation des huiles de traitement selon l'une quelconque des revendications 1 à 6 pour le mélange d'un élastomère choisi parmi les EPDM (terpolymères éthylène/propylène/diène), EPR (copolymères éthylène/propylène), SBS (styrène/butadiène/styrène), SEBS (styrène/éthylène/butadiène/styrène), SBC (copolymère styréniques séquencés saturés), BR (polybutadiène), IR (polyisoprène).

8. Procédé de production d'élastomères choisis parmi les EPDM (terpolymères éthylène/propylène/diène), EPR (copolymères éthylène/propylène), SBS (styrène/butadiène/styrène), SEBS (styrène/éthylène/butadiène/styrène), SBC (copolymère styréniques séquencés saturés), BR (polybutadiène), IR (polyisoprène), comprenant l'étape de mélange desdits élastomères avec une huile de traitement comprenant un composant d'huile minérale et un composant ester selon l'une quelconque des revendications 1 à 6.

9. Procédé de la revendication 8, dans lequel ledit élastomère est un EPDM et le composant ester est un ester saturé, de préférence le tétraester d'acide isooctadécanoïque avec du pentaérythritol (CAS : 62125-22-8).

10. Élastomère choisi parmi les EPDM (terpolymères éthylène/propylène/diène), EPR (copolymères éthylène/propylène), SBS (Styrène/Butadiène/Styrène), SEBS (styrène/éthylène/butadiène/styrène), SBC (copolymère styréniques séquencés saturés), BR (Polybutadiène), IR (Polyisoprène), étendu avec une huile de mise en œuvre comprenant un composant huile minérale et un composant ester selon l'une quelconque des revendications 1 à 6.

11. Élastomère selon la revendication 10, dans lequel ledit élastomère est un EPDM et ladite substance ester a un degré d'insaturation, mesuré selon la norme ASTM D5554, de 5,0 ou moins, de préférence de 3,5 ou moins.

12. Élastomère selon la revendication 10 ou 11, dans lequel ledit élastomère est l'EPDM, ledit composant ester est le 2,2-bis[[(1-oxoisooctadécyl)oxy]méthyl]-1,3-propanediyl bis(isooctadécanoate) (CAS : 62125-22-8) et ladite huile minérale est le distillat de pétrole paraffinique lourd (CAS : 64742-54-7).

13. Élastomère selon la revendication 12, dans lequel le rapport en poids entre l'huile minérale et l'ester est compris entre 90:10 et 35:65, de préférence entre 85:15 et 75:25.
